## (19) Europäisches Patentamt
European Patent Office
Office européen des brevets

(11) **EP 1 074 296 B1**

(12) **EUROPÄISCHE PATENTSCHRIFT**

(45) Veröffentlichungstag und Bekanntmachung des Hinweises auf die Patenterteilung:
**12.10.2005 Patentblatt 2005/41**

(51) Int Cl.$^7$: **B01J 19/32**

(21) Anmeldenummer: **00116188.4**

(22) Anmeldetag: **02.08.2000**

(54) **Verfahren zum Wärme- und Stoffaustausch**

Process for heat and mass exchange

Procédé pour échange de chaleur et de masse

(84) Benannte Vertragsstaaten:
**AT BE CH CY DE DK ES FI FR GB GR IE IT LI LU MC NL PT SE**

(30) Priorität: **03.08.1999 DE 19936380**

(43) Veröffentlichungstag der Anmeldung:
**07.02.2001 Patentblatt 2001/06**

(73) Patentinhaber: **BASF Aktiengesellschaft**
**67056 Ludwigshafen (DE)**

(72) Erfinder:
• **Kaibel, Gerd, Dr.**
**68623 Lampertheim (DE)**

• **Stroezel, Manfred**
**68549 Ilvesheim (DE)**
• **Stammer, Achim, Dr.**
**Mobile, Alabama 36695 (US)**

(74) Vertreter: **Isenbruck, Günter et al**
**Isenbruck, Bösl, Hörschler, Wichmann, Huhn**
**Patentanwälte**
**Theodor-Heuss-Anlage 12**
**68165 Mannheim (DE)**

(56) Entgegenhaltungen:
**WO-A-97/16247    US-A- 4 186 159**
**US-A- 5 124 086    US-A- 5 538 700**
**US-A- 5 921 109**

**Beschreibung**

Die Erfindung betrifft ein Verfahren zum Wärme- und/oder Stoffaustausch zwischen einer Flüssigkeit und einem Gas in einer Kolonne. Für den Wärme- und Stoffaustausch zwischen flüssigen und gasförmigen Medien, insbesondere für die destillative Auftrennung von Stoffgemischen, werden in der Technik Boden- und Packungskolonnen eingesetzt. Die beiden Bauformen unterscheiden sich hinsichtlich der hydrodynamischen Betriebsbedingungen.

Bei Bodenkolonnen bildet sich auf den einzelnen Böden jeweils eine Sprudelschicht aus, bei der überwiegend die Flüssigkeit die kontinuierliche Phase und das Gas die disperse Phase darstellt. Zwischen den einzelnen Böden befinden sich Freiräume, in denen überwiegend das Gas die kontinuierliche Phase darstellt.

Die Betriebsweise von Packungskolonnen ist hinsichtlich der Hydrodynamik von Bodenkolonnen verschieden. Hier bildet nicht die Flüssigkeit, sondern das Gas die kontinuierliche Phase. Die Flüssigkeit läuft als Film über die Packungen nach unten ab.

Geordnete Packungen sind aus einer Vielzahl von Einzellagen aus Packungselementen, wie Blechen, Streckmetallen und Drahtgeweben, aufgebaut, die in einer regelmäßigen Struktur vertikal zueinander angeordnet sind und üblicherweise durch Befestigungsmittel wie Metalldrähte, dünne Metallstäbe oder Metallblechstreifen in einem Verbund zusammengehalten werden. Meist weisen diese Packungselemente selbst eine geometrische Strukturierung auf, beispielsweise in Form von Knicken oder kreisförmigen Löchern mit etwa 4 bis 6 mm Durchmesser. Die Öffnungen dienen dazu, die Flutgrenze der Packung anzuheben und eine höhere Kolonnenbelastung zu ermöglichen.

Als Beispiele sind Packungen der Typen "Mellapak", CY und BX der Sulzer AG, CH-8404 Winterthur, oder die Typen A3, BSH oder B1 der Montz GmbH, D-40723 Hilden, zu nennen. Die Knicke der Packungselemente dieser Packungen verlaufen geradlinig und in einem Winkel von etwa 30° bis 45° zu der Längsachse der Packung geneigt. Die Knickungen der Packungselemente führen zu einer Kreuzkanalstruktur innerhalb der geordneten Packung.

Die DE 196 05 286 A1 beschreibt eine Sonderentwicklung, bei der dieser Winkel weiter auf Werte von 3° bis 14° verringert ist, um bei Anwendungen im hohen Vakuum (ca. 1 mbar Kopfdruck) den Druckverlust der Packungen so weit wie möglich abzusenken.

Im Stand der Technik sind geordnete Packungen bekannt, die katalytisch aktiv sind. Eine katalytisch aktive Destillationspackung in konventioneller Formgebung ist beispielweise die Packung "KATAPAK" der Sulzer AG, CH-8404 Winterthur.

Geordnete Packungen werden üblicherweise als einzelne Packungslagen bereitgestellt, die dann in der Kolonne übereinander gestapelt angeordnet werden. Die Packungslagen weisen üblicherweise eine Höhe von etwa 0,17 m bis etwa 0,30 m auf.

Im Stand der Technik ist eine geordnete Packung mit der Bezeichnung "Montz" A2 der Montz GmbH, D-40723 Hilden bekannt, welche geknickte Packungselemente mit gebogenen Knickverläufen aufweist. Innerhalb eines Packungselementes variiert die Steigung dieser Knickverläufe über die Höhe des Packungselementes. Hierbei wechseln sich die Lagen der Packungselemente so ab, daß sich jeweils ein Packungselement, bei dem die Steigung der Knicklinie am unteren Ende der Packungslage am größten ist mit einem Packungselement abwechselt, bei dem die Steigung der Knicklinie am oberen Ende der Packungslage am größten ist. Die innere Geometrie der Packungslage ist daher über ihre Höhe konstant. Dieser Packungstyp zeigt gegenüber den üblichen geordneten Packungen jedoch eine ungünstige Trennleistung.

Die US 4,186,159 beschreibt eine geordnete Packung aus flächigen Packungselementen, die eine Kreuzkanalstruktur ausbilden, wobei zur Verbesserung des Stoff- und Wärmetransports die einzelnen Packungselemente alternierende Bereiche mit glatter Oberfläche aufweisen, und Bereiche, die fein gewellt sind. Die Packungselemente sind zumindest in den glatten Bereichen perforiert.

Die US 5,921,109 beschreibt ein Verfahren zur Tieftemperaturrektifikation von flüssiger Luft unter Verwendung einer Packung mit Kreuzkanalstruktur mit Packungselementen, deren Struktur über ihre Höhe variiert. Aufgabe ist die Kapazitätserhöhung der Kolonne unter Vermeidung des Flutens der Packung. Hierzu sollen in jeweils unteren Bereichen einer Packungslage Knicke mit reduzierter Höhe gegenüber dem jeweils oberen Bereich ausgebildet werden oder es sollen die Knickverläufe in einem jeweils unteren Bereich in einem steileren Winkel gegenüber dem jeweils oberen Bereich ausgebildet werden.

Die WO 97/16247 beschreibt eine geordnete Packung mit Packungselementen, deren innere Geometrie über ihre Höhe variiert, wobei an den Enden einer Packungslage die Knickverläufe jeweils steiler sind, um den Druckverlust an den Packungsenden zu minimieren und somit die Flüssigkeitsanstauung zu reduzieren bzw. zu verhindern. Zur Abgrenzung gegen diese Entgegenhaltung gelten ähnliche Überlegungen wie vorstehend dargelegt, insbesondere soll eine Flüssigkeitsanstauung gerade vermieden werden, wogegen nach der Erfindung der vorliegenden Anmeldung gezielt eine kontinuierliche flüssige Phase gewährleistet werden soll.

Die US 5,538,700 beschreibt einen Plattenwärmetauscher zur Kontrolle des Temperaturprofils in einer Reaktionszone mit geknickten Platten, die auf einer Seite vom Wärmetauschmittel und auf der gegenüberliegenden Seite vom Reaktionsgemisch umströmt werden, wobei Erhöhungen vorgesehen sind, die in den vom Wärmetauschmittel durchströmten Bereich hineinragen, dadurch Turbulenzen bewirken, und über die Veränderung der Turbulenz die Wärmeübergangskoeffizienten beeinflussen.

Ebenfalls Wärmetauscherplatten beschreibt die US 5,124,086, und zwar zum Kühlen von Wasser mittels Luft in Kühltürmen. Durch Beeinflussung des Strömungsbildes, und zwar mittels stärkerer Krümmung der Platten im oberen Bereich, soll die Fouling-Tendenz reduziert werden

Wegen der großen technischen Bedeutung von Wärme- und Stoffaustauschvorgängen in der Chemie und der Verfahrenstechnik, insbesondere der destillativen Stofftrennung, zielen eine Vielzahl von technischen Entwicklungen auf die Verbesserung von Wärme- und Stoffaustauschkolonnen, insbesondere Destillationskolonnen, ab. Wichtige Kriterien für eine leistungsfähige und wirtschaftliche Wärme- und Stoffaustauschkolonne, insbesondere Destillationskolonne, sind ihr Preis, ihre Durchsatzleistung für den Gas- und Flüssigkeitsstrom und die auf die Höhe der Kolonne bezogene Trennleistung. Sie wird üblicherweise charakterisiert als Anzahl der theoretischen Trennstufen je Meter Kolonnenhöhe ($n_{th}$/m) oder als Bauhöhe für eine theoretische Trennstufe (HETP).

Aufgabe der vorliegenden Erfindung ist, die Leistung und die Wirtschaftlichkeit von Wärme- und Stoffaustauschkolonnen, insbesondere für destillative Zwecke, zu steigern.

Diese Aufgabe wird gelöst durch ein Verfahren zum Wärme- und/oder Stoffaustausch zwischen einer Flüssigkeit und einem Gas in einer Kolonne bei welchem die Flüssigkeit und das Gas über eine geordnete Packung aufweisend mindestens eine Packungslage mit einem ersten, unteren und einem zweiten, oberen Ende, mit über ihre Höhe variierender, innerer Geometrie geführt werden und die Flüssigkeits- und Gasmengen so eingestellt werden, dass sich in einem ersten, insbesondere unteren Bereich der Packungslage gezielt eine Sprudelschicht mit überwiegend disperser Gasphase und gleichzeitig in einem zweiten, insbesondere oberen Bereich der Packungslage gezielt eine Filmströmung der Flüssigkeit mit überwiegend kontinuierlicher Gasphase ausbildet.

Die innere Geometrie ist also - im Gegensatz zu geordneten Packungen des Standes der Technik - über die Höhe der Packungslage nicht konstant.

Die beschriebenen hydrodynamischen Betriebszustände können dadurch erreicht werden, daß der Strömungswiderstand über die Höhe der Packungslage variiert. Bevorzugt weist der erste, gegebenenfalls untere Bereich der Packungslage einen größeren Strömungswiderstand auf als der zweite, gegebenenfalls obere Bereich der Packungslage.

Der erste Bereich der Packungslage befindet sich bevorzugt in einem unteren Bereich der Packungslage und der zweite Bereich der Packungslage bevorzugt in einem oberen Bereich der Packungslage. Im Rahmen der vorliegenden Erfindung erstrecken sich der erste, gegebenenfalls untere Bereich und der zweite, gegebenenfalls obere Bereich der Packungslage bevorzugt über die gesamte Querschnittsfläche der Packungslage. Der erste, untere Bereich der Packungslage kann direkt an das untere Ende der Packungslage und der zweite, obere Bereich der Packungslage direkt an das obere Ende der Packungslage angrenzen. In einer bevorzugten Ausführungsform schließt sich der erste, gegebenenfalls untere Bereich der Packungslage direkt an den zweiten, gegebenenfalls oberen Bereich an.

Im Rahmen der vorliegenden Erfindung wird eine geordnete Packung bevorzugt, bei welcher die Packungslage sich berührende, flächige Packungselemente, insbesondere Bleche, Streckmetalle, Drahtgewebe und Gestricke, mit Knicken bestimmter Verläufe aufweist, wobei die Knickverläufe oder Tangenten an die Knickverläufe in dem ersten Bereich der Packungslage einen größeren Winkel mit der Längsachse der Packungslage bilden als in dem zweiten Bereich der Packungslage. Besonders bevorzugt bilden die Knickverläufe oder die Tangenten an die Knickverläufe der Packungselemente in dem ersten Bereich der Packungslage einen Winkel von etwa 45° bis etwa 75° und in dem zweiten Bereich von etwa 10° bis etwa 45° mit der Längsachse der Packungslage. Ganz besonders bevorzugt bilden die Knickverläufe oder die Tangenten an die Knickverläufe in dem ersten Bereich der Packungslage einen Winkel mit der Längsachse der Packungslage von etwa 60° bis etwa 70° und in dem zweiten Bereich von etwa 30° bis etwa 45°.

Die Knicke können zumindest abschnittsweise einen bogenförmigen oder geradlinigen Verlauf aufweisen.

In einer bevorzugten Ausführungsform sind die Knicke in einer monoton verlaufenden Form so gebogen, daß die Tangenten an die Knickverläufe am unteren Ende der Packungslage einen Winkel von etwa 45° bis etwa 75°, bevorzugt etwa 60° bis etwa 70°, mit der Längsachse der Packungslage bilden; wobei sich nach oben hin dieser Winkel der Tangenten an die Knickverläufe auf Werte von etwa 10° bis etwa 45°, bevorzugt etwa 30° bis etwa 45° zur Längsachse der Packungslage hin verringert.

Die geordnete Packung kann auch derart gestaltet sein, daß die Knickverläufe abschnittsweise gerade ausgeführt sind, wobei die Knickverläufe in dem ersten Bereich der Packungslage bevorzugt einen Winkel von etwa 45° bis etwa 75°, besonders bevorzugt von etwa 60° bis etwa 70°, mit der Längsachse der Packungslage bilden, und sich der Winkel der Knickverläufe nach oben hin in einem oder in mehreren Schritten auf Werte von vorzugsweise etwa 10° bis etwa 45°, besonders bevorzugt etwa 30° bis etwa 45°, zur Längsachse der Packungslage verringert.

Die spezifische Oberfläche der erfindungsgemäßen geordneten Packungen beträgt bevorzugt etwa 100 bis 750 m$^2$/m$^3$, besonders bevorzugt 250 bis 500 m$^2$/m$^3$.

Die Knicke in den Packungselementen können scharfkantig oder abgerundet ausgeführt sein.

Der erste Bereich der Packungslage weist bevorzugt eine Höhe von 0,02 bis 0,10 m, weiter bevorzugt von 0,03 bis 0,10 m und besonders bevorzugt von 0,03 bis 0,05 m auf.

Der zweite Bereich der Packungslage weist bevorzugt eine Höhe von 0,1 bis 0,3 m und besonders bevorzugt von 0,15 bis 0,2 m auf.

Die Packungslagen der erfindungsgemäßen, geordneten Packung weisen vorzugsweise eine Höhe von 0,05 bis 0,40 m, weiter bevorzugt von 0,08 bis 0,35 m oder von 0,10 bis 0,25 m und besonders bevorzugt von 0,12 bis 0,20 m auf. Die niedrigere Höhe der Packungslage wird vorzugsweise für eng gepackte Packungen mit einer spezifischen Oberfläche von etwa 500 bis etwa 750 m²/m³, der höhere Wert für gröbere Packungen mit etwa 100 bis etwa 500 m²/m³ vorgesehen.

Die Flüssigkeitsbelastung der geordneten Packung beträgt vorzugsweise zwischen etwa 0,2 bis 50 m³/m²h. Bei 70 bis 80% der Flutgrenze beträgt der Druckabfall der erfindungsgemäßen Packung bevorzugt etwa 2 bis 10 mbar/m. Die Packungselemente weisen vorzugsweise eine Blechstärke von etwa 0,1 mm auf.

Bei einer bevorzugten Ausführungsform der vorliegenden Erfindung, bei welcher die Packungslage Packungselemente aufweist, sind zumindest ein Teil der Packungselemente am unteren Ende und/oder oberen Ende der Packungslage laschenartig abgebogen. Bevorzugt weisen die Packungselemente hierfür am unteren Ende und/oder oberen Ende der Packungslage in definierten Abständen, die vorzugsweise etwa der halben Knickbreite entsprechen, Einschnitte auf, so daß Laschen in unterschiedlicher Richtung abgebogen werden können. Besonders bevorzugt sind die Laschen alternierend nach beiden Seiten des Packungselementes abgebogen. Die Tiefe der Einschnitte beträgt bevorzugt 3 bis 8 mm. Der Winkel, den die abgebogenen Laschen mit dem Packungselement bilden, beträgt dabei vorzugsweise etwa 110 bis 150°, so daß die Laschen in der Packungslage etwa horizontal ausgerichtet sind. Die seitliche Erstreckung der Laschen wird so gewählt, daß etwa 30 bis 60% des Strömungsquerschnittes versperrt werden. Bevorzugt wird nur jedes zweite aufeinanderfolgende Packungselement seitlich abgebogen, um eine ausreichende mechanische Stabilität der aufeinandergestapelten Packungslagen zu gewährleisten.

Bei einer weiteren, bevorzugten Ausführungsform der vorliegenden Erfindung, bei welcher die Packungslage ebenfalls Packungselemente aufweist, sind zwischen mindestens einem Teil der Packungselemente Streifen bevorzugt aus Metallblech angeordnet. Diese sind vorzugsweise eben ausgeführt. Die Streifen befinden sich bevorzugt am unteren Ende der Packungslage. Sie können ein- oder beidseitig an den Packungselementen angeordnet und vorzugsweise an diesen befestigt sein. Besonders bevorzugt werden die Streifen durch Punktschweißung an den Packungselementen befestigt. Die Streifen weisen bevorzugt eine Höhe von etwa 15 bis 25 mm auf. Ein Ende der Streifen, bevorzugt das obere Ende der Streifen, ist vorzugsweise seitlich um etwa 2 bis etwa 5 mm abgebogen. Hiermit wird der Strömungswiderstand in vorteilhafter Weise weiter erhöht. Die seitliche Abbiegung der Streifen befindet sich vorzugsweise zwischen den Knicken der Packungselemente. Das seitliche Abbiegen der Streifen kann beim Zusammenbau der Packungselemente zu einer Packungslage erfolgen.

Die vorliegende Erfindung umfaßt eine weitere, bevorzugte Ausführungsform, bei welcher die Packungslage aus einer Kombination von mindestens einer ersten und einer zweiten Teilpackungslage zusammengesetzt ist, wobei sich die erste Teilpackungslage und die zweite Teilpackungslage bezüglich ihrer inneren Geometrie voneinander unterscheiden. Dabei ist in der Packungslage die erste Teilpackungslage vorzugsweise unterhalb der zweiten Teilpackungslage angeordnet. Besonders bevorzugt sind die erste und die zweite Teilpackungslage direkt aufeinander angeordnet, wobei die erste Teilpackungslage die untere und die zweite Teilpackungslage die obere Teilpackungslage bildet. Die Teilpackungslagen sind vorzugsweise so gestaltet, daß deren innere Geometrie nicht über ihre Höhe variiert. Die erste, gegebenenfalls untere Teilpackungslage weist vorzugsweise eine Höhe von 0,02 bis 0,10 m und besonders bevorzugt von 0,03 bis 0,05 m, auf. Die zweite, gegebenenfalls obere Teilpackungslage weist vorzugsweise eine Höhe von 0,05 bis 0,40 m, besonders bevorzugt von 0,10 bis 0,25 m, auf. Der Strömungswiderstand der ersten Teilpackungslage je Meter Höhe ist vorzugsweise etwa 1,2 bis etwa 5 mal, besonders bevorzugt etwa 1,5 bis etwa 2,5 mal so hoch wie der Strömungswiderstand der zweiten Teilpackungslage. Setzen sich die Teilpackungslagen aus Packungselementen mit Knicken zusammen, so kann der Strömungswiderstand der Teilpackungslagen eingestellt werden durch den Winkel, den die Knickverläufe oder Tangenten an die Knickverläufe mit der Längsachse der Packungslage bilden. Je größer dieser Winkel ist, desto höher ist der Strömungswiderstand. Im Rahmen der vorliegenden Erfindung ist eine Ausführungsform bevorzugt, bei welcher die Teilpackungslagen aus Packungselementen mit Knicken zusammengesetzt sind, wobei die Knickverläufe oder Tangenten an die Knickverläufe der ersten Teilpackungslage einen größeren Winkel mit der Längsachse der Packungslage bilden, als die Knickverläufe oder Tangenten der Knickverläufe der zweiten Teilpackungslage. Bevorzugte Winkel wurden vorstehend bereits erwähnt, auf welche hier Bezug genommen wird. Der vorstehend genannte erste Bereich der Packungslage entspricht hierbei der hier genannten ersten Teilpackungslage und der vorstehend genannte zweite Bereich der Packungslage der hier genannten zweiten Teilpackungslage. Der Strömungswiderstand der Teilpackungslagen kann darüber hinaus auch durch die Größe der spezifischen Packungsoberfläche je Volumen erzielt werden. Bevorzugt weisen die Teilpackungslagen unterschiedliche spezifische Oberflächen je Volumen auf. Besonders bevorzugt weist die erste, gegebenenfalls untere Teilpackungslage eine höhere spezifische Oberfläche je Volumen auf als die zweite, gegebenenfalls obere Teilpackungslage. Hierbei ist die spezifische Oberfläche der ersten, gegebenenfalls unteren Teilpackungslage vorzugsweise um 20 bis 100%, besonders bevorzugt um 30 bis 60% größer als die der zweiten, gegebenenfalls oberen Packungslage. Bei einer besonders bevorzugten Ausführungsform ist die erste, gegebenenfalls untere Teilpackungslage aus Drahtgeweben gefertigt. Dies ermöglicht eine gezielte Einstellung des Flüssigkeitsinhaltes durch Veränderung der Heizleistung. Die Teilpackungslagen sind bevorzugt um 45° bis 90° gegeneinander verdreht angeordnet.

Die Packungselemente können eine dünne Schicht von Edelmetallkatalysatoren aufweisen. Dies spielt dann eine Rolle, wenn in einer Kolonne mit der erfindungsgemäßen Packung neben dem Wärme- und/ oder Stoffaustausch auch katalysierte Reaktionen ablaufen sollen.

Die Kolonne wird vorzugsweise mit einem Druckverlust von etwa 5 bis etwa 30 mbar, besonders bevorzugt von etwa 8 bis 12 mbar, je Meter Packungshöhe betrieben. Der Druckverlust kann durch die Flüssigkeits- und Gasmengen sowie durch die Heizleistung eingestellt werden.

In einer besonderen Ausführungsform läuft in der Kolonne überlagert zu einer destillativen Trennung eine chemische Reaktion ab. Sie kann homogen oder heterogen katalysiert sein oder spontan ablaufen. Die Verweilzeit der Flüssigkeit in der Kolonne kann durch die Wahl der Heizleistung unter Messung des Differenzdrucks gezielt eingestellt werden.

Homogen katalysierte Reaktionen können beispielsweise säurekatalysierte Acetalisierungen, Acetalspaltungen, Veresterungen, Verseifungen und Etherbildungen sowie alkoholatkatalysierte Umesterungen sein. Ein Beispiel für eine spontan ablaufende Reaktion in einer Destillationskolonne ist die Abtrennung von Formaldehyd aus wässrigen oder alkoholischen Lösungen.

Ebenso ist es möglich, die erfindungsgemäßen geordneten Packungen direkt mit in der Technik bereits etablierten Verfahren mit katalytisch aktivem Material zu beschichten und heterogen katalysierte Reaktivdestillationen durchzuführen. Wenn aus Kostengründen nur Teile der Packungen mit katalytisch aktivem Material beschichtet werden sollen, ist es günstig, bevorzugt den ersten, gegebenenfalls unteren Bereich der Packungslage, in dem sich überwiegend die Sprudelschicht ausbildet, zu beschichten, da hier besonders gute Stoffübergangsbedingungen vorliegen.

Die erfindungsgemäßen Packungen eignen sich ebenfalls für Reaktivdestillationen, bei denen die Packungen mit einer dünnen Schicht von Edelmetallkatalysatoren beschichtet sind. Hierbei können dann in Gegenwart von Wasserstoff Partialhydrierungen durchgeführt werden. Besonders bevorzugt werden mit dem vorliegenden Verfahren bei einem Gesamtdruck von 3 bis 8 bar, besonders bevorzugt von etwa 4 bar, aus einem $C_4$-Kohlenwasserstoffgemisch Komponenten mit Dreifachbindungen mit hoher Selektivität zu Komponenten mit Doppelbindungen hydriert.

Die vorliegende Erfindung weist im wesentlichen die folgende Vorteile auf:

Die Trennleistung der erfindungsgemäßen geordneten Packung ist bei Einstellung des beschriebenen hydrodynamischen Zustandes bis zu 60% höher als die Trennleistung von geordneten Packungen gemäß des Standes der Technik. Hierdurch können die erforderliche Bauhöhe der Kolonne verringert und somit Investitionskosten gespart werden.

Die Trennleistung der Kolonne wird üblicherweise charakterisiert als Anzahl der theoretischen Trennstufen je Meter Kolonnenhöhe ($n_{th}$/m) oder als Bauhöhe für eine theoretische Trennstufe (HETP).

Die erfindungsgemäßen Packungen erschließen durch den hohen Flüssigkeitsanteil in der Packung auch Anwendungsgebiete, die bisher Bodenkolonnen oder Sonderkonstruktionen vorbehalten waren. So lassen sich einige chemische Reaktionen in besonders vorteilhafter Weise in Kolonnen durchführen, die mit den erfindungsgemäßen geordneten Packungen ausgerüstet sind.

Die erfindungsgemäß gestaltete und betriebene geordnete Packung stellt eine Übergangsform zwischen einer Packungskolonne mit überwiegend disperser Flüssigphase und einer Bodenkolonne mit überwiegend kontinuierlicher Flüssigphase dar. Günstige Eigenschaften einer Bodenkolonne (hohe Stoffaustauschleistung in der Sprudelschicht) und einer Packungskolonne (Verhinderung von Tropfenmitriß und zusätzlicher Stoffaustausch an der Packungsoberfläche) können somit kombiniert werden.

Weitere Vorteile, Merkmale und Anwendungsmöglichkeiten der Erfindung werden nun anhand von Ausführungsbeispielen unter Bezugnahme auf die beigefügte Zeichnung detailliert erläutert. Diese zeigt in

Fig. 1    eine Packungslage 1 einer Ausführungsform der geordneten Packung

Fig. 2    hintereinander angeordnete Packungselemente 4 einer Packungslage 1 einer weiteren Ausführungsform der geordneten Packung

Fig. 3    hintereinander angeordnete Packungselemente 4 einer Packungslage 1 einer weiteren Ausführungsform der geordneten Packung

Fig. 4    einen Ausschnitt eines Packungselementes 4 einer Packungslage 1 einer Ausführungsform einer geordneten Packung mit seitlich abgebogenen Packungselementen 4 in dreidimensionaler Ansicht

Fig. 5    hintereinander angeordnete Packungselemente 4 einer Packungslage 1 einer weiteren Ausführungsform der geordneten Packung mit dünnen Streifen 15 zwischen den Packungselementen 4.

Fig. 6    eine weitere Ausführungsform der geordneten Packung mit einer Packungslage 1, die aus zwei Teilpackungslagen unterschiedlicher innerer Geometrie gebildet wird.

Fig. 7    eine weitere Ausführungsform der geordneten Packung mit einer Packungslage 1, die aus zwei Teilpackungslagen unterschiedlicher innerer Geometrie gebildet wird.

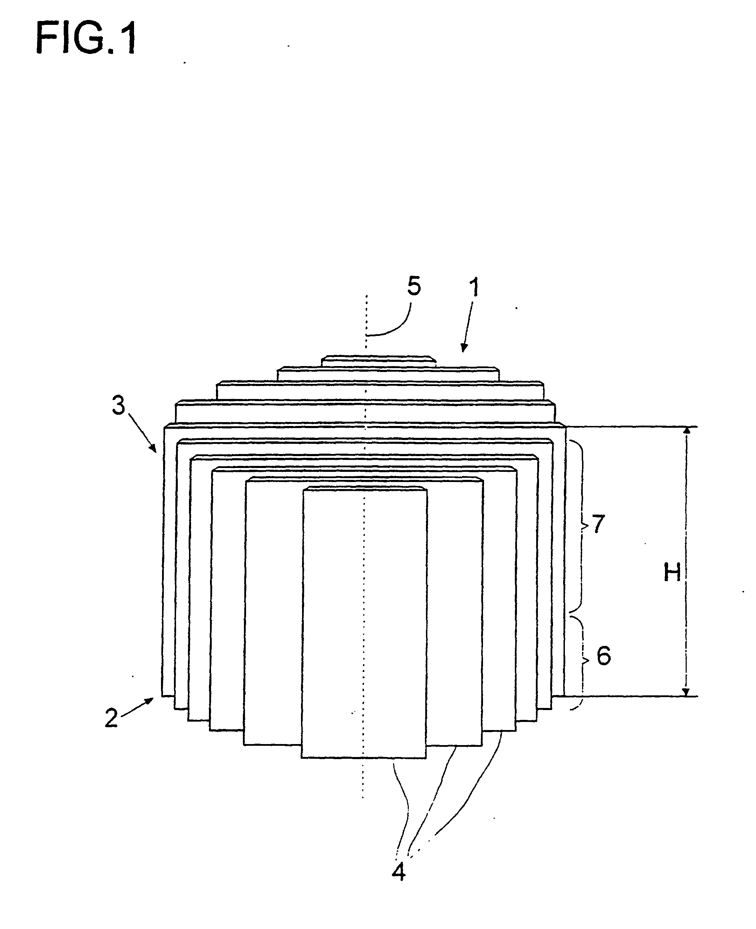

In Fig. 1 ist eine Packungslage 1 einer Ausführungsform einer geordneten Packung gemäß der vorliegenden Erfindung dargestellt. Die Packungslage 1 weist ein erstes, unteres Ende 2 und ein zweites, oberes Ende 3 auf. Sie besitzt eine Höhe H von beispielsweise 0,2 m. Die Packungslage weist sich berührende, flächige Packungselemente 4 aus mit Knicken (nicht dargestellt) versehenen Blechen auf. Die Bezugsziffer 5 zeigt die Längsachse der Packungslage 1. Die Packungslage 1 weist des weiteren einen kreisförmigen Querschnitt auf. Die innere Geometrie der Packungslage 1 variiert über deren Höhe (nicht dargestellt). Die Packungslage 1 besitzt einen ersten, unteren Bereich 6, dessen innere Geometrie sich von einem zweiten, oberen Bereich 7 unterscheidet. Der erste, untere Bereich 6 der Pakkungslage 1 weist einen größeren Strömungswiderstand auf als der zweite, obere Bereich 7. Durch eine geeignete Einstellung der Flüssigkeits- und Gasmengen bildet sich in dem ersten, unteren Bereich 6 der Pakkungslage 1 eine Sprudelschicht mit überwiegend disperser Gasphase und gleichzeitig in dem zweiten, oberen Bereich 7 der Packungslage eine Filmströmung der Flüssigkeit mit überwiegend kontinuierlicher Gasphase aus. Der erste, untere Bereich 6 der Packungslage 1 und der zweite, obere Bereich 7 der Packungslage 1 erstrecken sich über die gesamte Querschnittsfläche der Packungslage 1. Außerdem schließt sich der erste, untere Bereich 6 direkt an den zweiten, oberen Bereich 7 an. Der zweite, obere Bereich 7 der Packungslage 1 grenzt an das zweite, obere Ende 3 der Packungslage 1 an und der erste, untere Bereich 6 grenzt an das erste, untere Ende 2 der Packungslage 1 an.

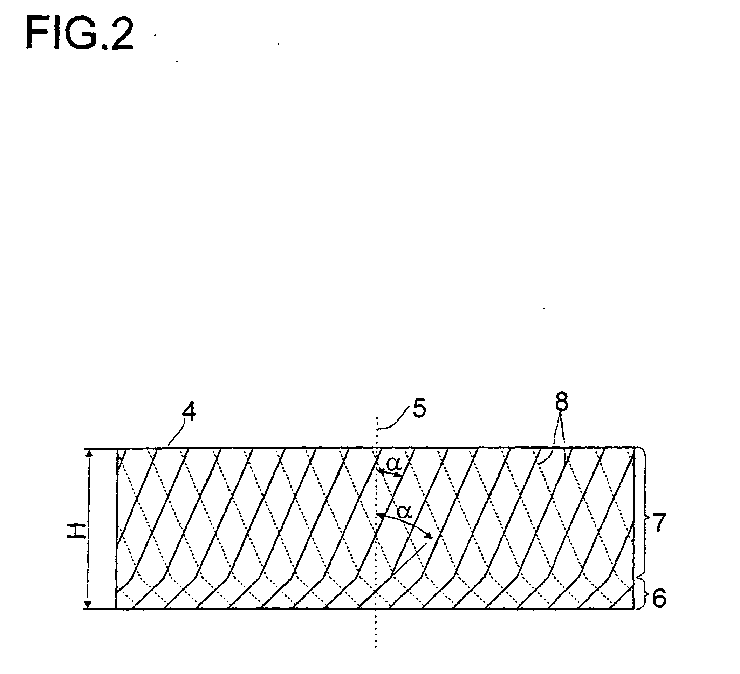

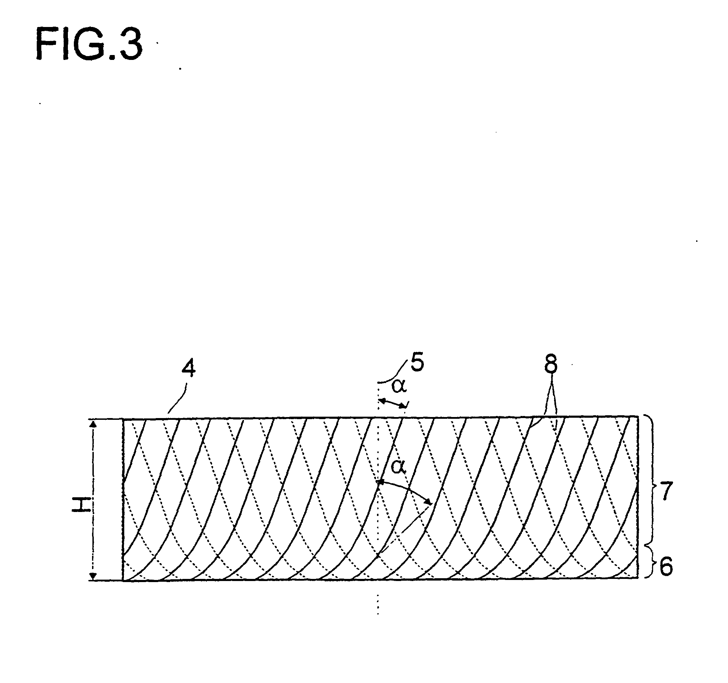

In den Fig. 2 und 3 sind jeweils hintereinander angeordnete Packungselemente 4 einer Packungslage 1 verschiedener Ausführungsformen der geordneten Packung gemäß der vorliegenden Erfindung schematisch dargestellt. Die durchgezogenen Linien zeigen die Knickverläufe des ersten, dritten, fünften, usw. Pakkungselementes 4 und die gestrichelten Linien die Knickverläufe des zweiten, vierten, sechsten usw. Pak-

kungselementes 4.

Die Packungselemente 4 in Fig. 2 weisen dieselbe Höhe H von beispielsweise 0,2 m wie die Pakkungslage 1 auf. Die Packungselemente 4 bestehen aus Metallblechen mit Knicken 8, wodurch die Pakkungslage 1, welche aus diesen Packungselementen aufgebaut ist, eine Kreuzkanalstrukur erhält. Die Knicke 8 weisen einen absatzweisen geradlinigen Verlauf auf. In dem ersten, unteren Bereich 6 der Packungslage 1 bilden die Knickverläufe einen größeren Winkel $\alpha$ mit der Längsachse 5 der Packungslage 1 als in dem zweiten, oberen Bereich 7 der Packungslage 1. In dem ersten, unteren Bereich 6 der Packungslage 1 bilden die Knickverläufe einen Winkel $\alpha$ von etwa 60° mit der Längsachse 5 der Packungslage 1. In dem zweiten, oberen Bereich 7 bilden die Knickverläufe einen Winkel $\alpha$ von etwa 30° mit der Längsachse 5 der Packungslage 1.

Fig. 3 zeigt schematisch Packungselemente 4 einer Packungslage 1 einer weiteren Ausführungsform der geordneten Packung. Die Packungselemente 4 weisen Knicke 8 mit kontinuierlich gebogenen Knickverläufen auf. Die Packungselemente 4 besitzen dieselbe Höhe H von beispielsweise 0,2 m wie die Packungslage 1. Die Tangenten an die Knickverläufe bilden in dem ersten, unteren Bereich 6 der Packungslage 1 einen größeren Winkel $\alpha$ mit der Längsachse 5 der Packungslage 1 als in dem zweiten, oberen Bereich 7 der Packungslage 1. In dem ersten, unteren Bereich 6 der Packungslage 1 bilden die Tangenten an die Knickverläufe einen Winkel von etwa 45° bis etwa 75° mit der Längsachse 5 der Packungslage 1. In dem zweiten, oberen Bereich 7 bilden die Tangenten an die Knickverläufe einen Winkel $\alpha$ von etwa 10° bis etwa 45° mit der Längsachse 5 der Packungslage. Die Knicke 8 besitzen einen annähernd parabelförmigen Verlauf.

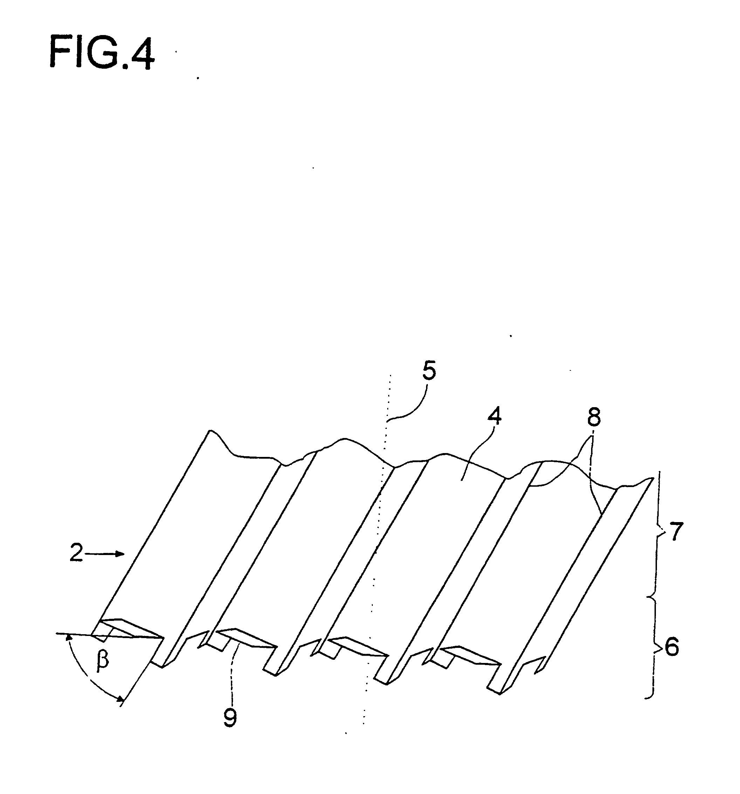

Fig. 4 zeigt in dreidimensionaler Ansicht einen Ausschnitt eines Packungselementes 4 einer weiteren Ausführungsform der erfindungsgemäßen Packung.

Das Packungselement 4 weist in dem dargestellten Ausschnitt Knicke 8 mit geradlinigem Verlauf auf. Die Bezugsziffer 5 bezeichnet die Längsachse der Packungslage 1, in welcher das dargestellte Packungselement 4 angeordnet ist. Am ersten, unteren Ende 2 der Packungslage 1 sind in Abständen, die etwa der halben Knickbreite entsprechen, etwa 3 bis 8 mm weite Einschnitte in das Packungselement 4 eingebracht und Laschen 9 alternierend nach beiden Seiten so abgebogen, daß sie mit dem Packungselement Winkel $\beta$ von 110 bis 150° bilden, so daß die Laschen in der Pakkungslage etwa horizontal ausgerichtet sind. Die seitliche Erstreckung der Laschen ist so gewählt, daß etwa 30 bis 60% des Strömungsquerschnittes versperrt werden.

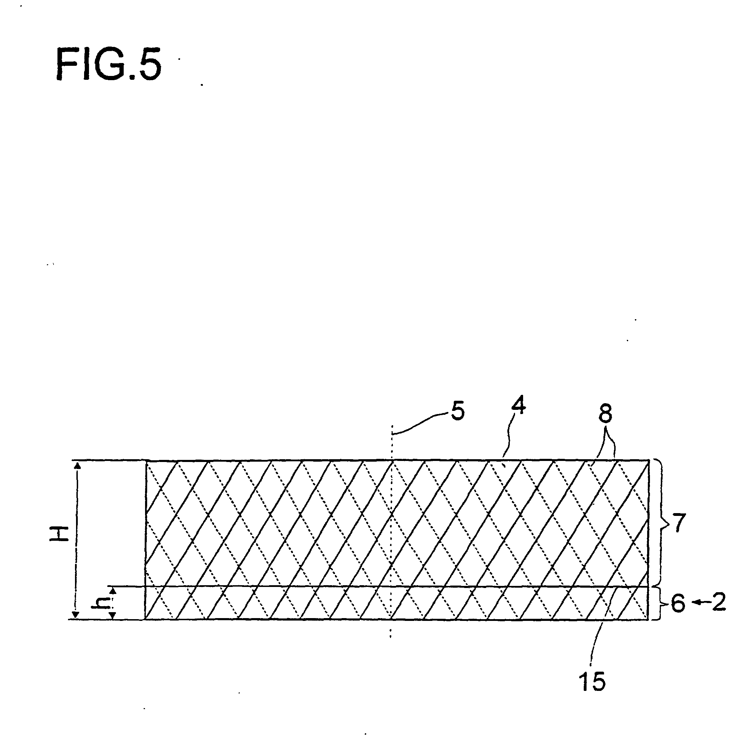

In Fig. 5 sind hintereinander angeordnete Pakkungselemente 4 einer Packungslage 1 einer weiteren Ausführungsform der geordneten Packung dargestellt. Die durchgezogenen Linien zeigen die Knickverläufe des ersten, dritten, fünften usw. Packungselementes 4 und die gestrichelten Linien die Knickverläufe des zweiten, vierten usw. Packungselementes 4. Die Packungselemente 4 weisen dieselbe Höhe H von beispielsweise 0,2 m wie die Packungslage 1 auf. Die Packungselemente 4 weisen geradlinige Knicke 8 auf. Die Bezugsziffer 5 bezeichnet die Längsachse der Packungslage 1. Am ersten, unteren Ende 2 der Packungslage 1 sind zwischen den Packungselementen 4 dünne Metallblechstreifen 15 angeordnet. Die Metallblechstreifen schließen direkt an das untere Ende 2 der Packungslage 1 an. Die Streifen sind eben und weisen vorzugsweise eine Höhe h von etwa 15 bis 25 mm auf.

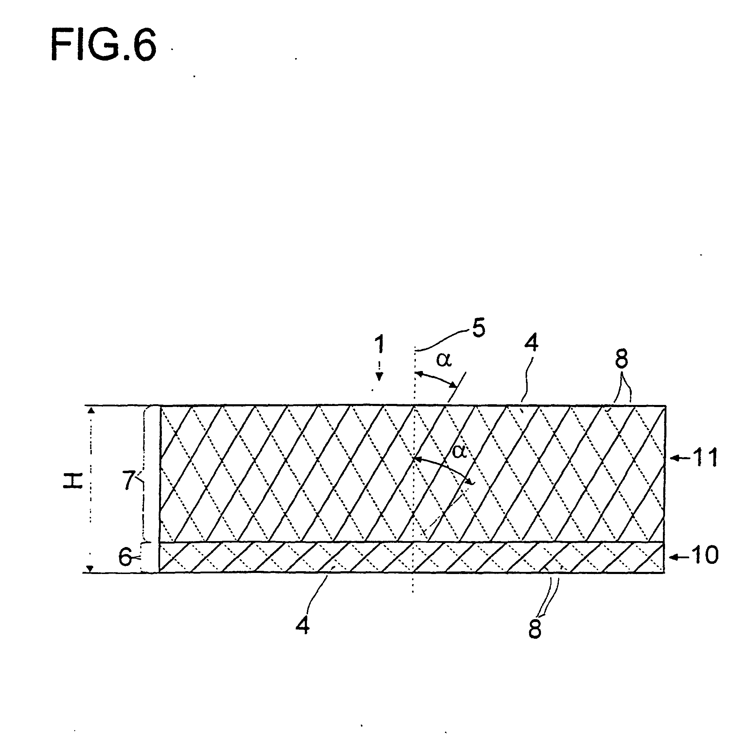

In Fig. 6 ist eine Packungslage 1 einer Ausführungsform der erfindungsgemäßen geordneten Packung im Längsschnitt dargestellt. Die Packungslage 1 besteht aus zwei übereinander angeordneten Teilpackungslagen, einer ersten Teilpackungslage 10 und einer zweiten Teilpackungslage 11. Beide Teilpackungslagen 10, 11 bilden zusammen die Höhe H der Packungslage 1. Die erste Teilpackungslage 10 bildet die untere Teilpackungslage und die zweite Teilpackungslage 11 die obere Teilpackungslage. Die erste Teilpackungslage 10 bildet den ersten, unteren Bereich 6 der Packungslage 1, die zweite Teilpackungslage 11 den zweiten, oberen Bereich 7 der Packungslage 1. Beide Teilpackungslagen bestehen aus mehreren nebeneinander bzw. hintereinander angeordneten Packungselementen 4.

Die Packungselemente 4 der Teilpackungslagen 10, 11 bestehen aus Metallblech und weisen Knicke 8 auf, die geradlinig verlaufen. Die durchgezogenen Linien zeigen die Knickverläufe des ersten, dritten, fünften usw. Packungselementes 4 und die gestrichelten Linien die Knickverläufe des zweiten, vierten, sechsten usw. Packungselementes 4. Die Knickverläufe bilden mit der Längsachse 5 der Packungslage 1 in der ersten Teilpackungslage 10 einen Winkel $\alpha$, der größer ist als derjenige, den die Knickverläufe in der zweiten Teilpackungslage 11 mit der Längsachse 5 bilden. In der ersten Teilpackungslage 10 bilden die Knickverläufe einen Winkel $\alpha$ von etwa 60° mit der Längsachse der Packungslage 1. In der zweiten Teilpackungslage 11 bilden die Knickverläufe einen Winkel $\alpha$ von etwa 30° mit der Längsachse der Packungslage 1. Die erste Teilpackungslage 10 weist dadurch einen größeren Strömungswiderstand auf als die zweite Teilpackungslage 11. Die erste Teilpackungslage 10 weist vorzugsweise eine Höhe von 0,02 bis 0,10 m, besonders bevorzugt von 0,03 bis 0,05 m, auf.

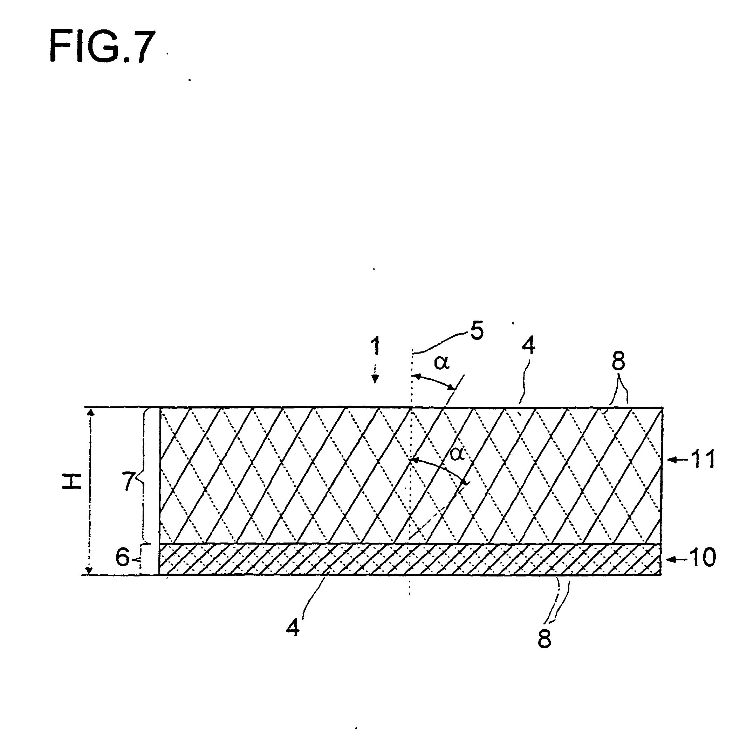

Fig. 7 zeigt, wie Fig. 6, eine Ausführungsform der erfindungsgemäßen geordneten Packung im Längsschnitt, mit einer Packungslage 1, die aus zwei Teilpackungslagen 10, 11 besteht. Die beiden Äusführungsformen der Fig. 6 und 7 stimmen im wesentlichen überein. Gleiche Bezugsziffern bezeichnen die gleichen Teile. Es wird insofern auf die Ausführungen zu Fig. 6 verwiesen. Im Unterschied zu der Ausführungsform in Fig. 6 bilden die Knickverläufe der vorliegenden Ausführungsform der Fig. 7 in der ersten und der zweiten Teilpackungslage 10, 11 den gleichen Winkel $\alpha$ mit der Längsachse 5 der Packungslage 1. Die untere Teilpackungslage 10 weist jedoch eine um 50% höhere spezifische Oberfläche auf als die obere Teilpackungslage 11. Hierdurch ist der Strömungswiderstand in der ersten, unteren Teilpackungslage 10 größer als in der zweiten, oberen Teilpackungslage 11.

Durch eine geeignete Einstellung der Flüssigkeits- und Gasmengen bildet sich bei allen in den Fig. 1 bis 7 beschriebenen Ausführungsformen der erfindungsgemäßen geordneten Packung in dem ersten, unteren Bereich 6 der Packungslage 1 gezielt eine Sprudelschicht mit überwiegend disperser Gasphase und gleichzeitig in dem zweiten, oberen Bereich 7 der Packungslage 1 gezielt eine Filmströmung der Flüssigkeit mit überwiegend kontinuierlicher Gasphase aus.

**Beispiele**

In den nachfolgenden Beispielen erfolgte die Messung des Differenzdrucks bzw. Druckverlusts $\Delta$ p in mbar/m. Der F-Faktor diente als Maß für die Gasbelastung der Kolonne bzw. der Packung. Dieser ist definiert als das Produkt aus der Gasgeschwindigkeit $w_G$ [m/sec.] und der Quadratwurzel aus der Gasdichte $\rho_G$ [kg/m$^3$]: $F = w_G \cdot \sqrt{\rho_G}$. Der dynamische Holdup hp [m$^3$/m$^3$] ist definiert als das Flüssigkeitsvolumen [m$^3$]in der Kolonne bezogen auf das leere Kolonnenvolumen [m$^3$]. Die Trennleistung der Kolonne wurde als Anzahl der theoretischen Trennstufen je Meter Kolonnenhöhe bzw. Packungshöhe ($n_{th}$/m) bestimmt.

Vergleichsbeispiel:

Als Versuchskolonne wurde eine Glaskolonne mit einem Innendurchmesser von 0,1 m verwendet. Sie war über eine Höhe von etwa 0,8 m mit 4 Packungslagen einer geordneten Blechpackung in Kreuzkanalstruktur mit einer spezifischen Oberfläche von 250 m$^2$/m$^3$ bestückt (Bauart Montz B1-250). Die geordnete Packung entsprach demgemäß einer geordneten Packung des Standes der Technik. Die Packungslagen dieser geordneten Packung wiesen Packungselemente mit geradlinig verlaufenden Knicken auf. Die Knickverläufe bildeten einen Winkel von 45° mit der Längsachse der Packungslage bzw. der Längsachse der Kolonne. Die Packungselemente wiesen kreisförmige Perforationen auf. Als Testgemisch diente das System Luft/Wasser. Die Kolonne wurde bei einem Druck von 1 bar und einer Temperatur von etwa 25°C betrieben. Am Kopf der Kolonne wurde eine Flüssigkeitsmenge von 100 l/h aufgegeben. Die am unteren Ende der Kolonne zugegebene Luftmenge wurde so variiert, daß sich F-Faktoren zwischen 0,7 und 3,3, Pa$^{0,5}$ ergaben.

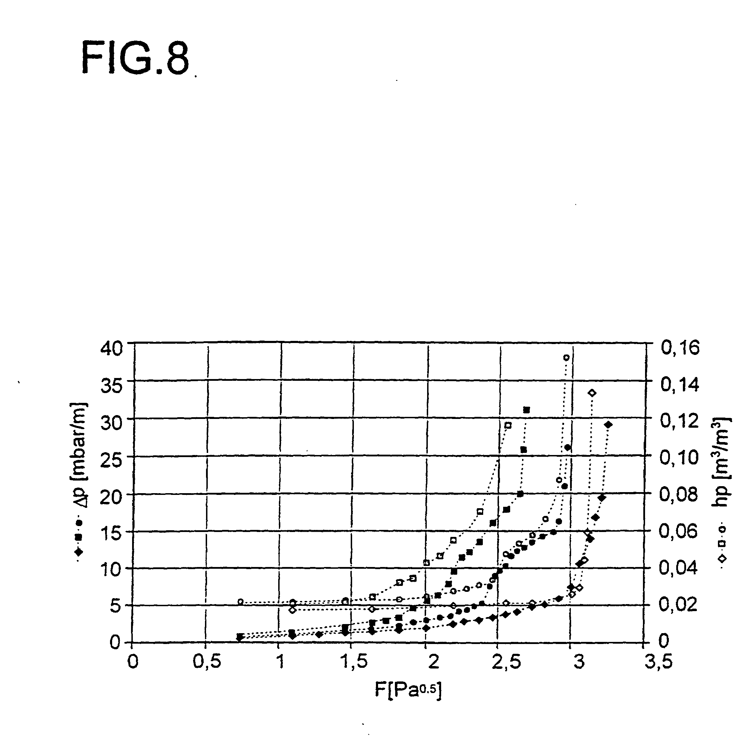

Es wurden der Differenzdruck $\Delta$ p und der dynamische Hold-up hp der geordneten Packung gemessen. Die Ergebnisse der Messungen sind in der Fig. 8 als Karos dargestellt. Ein gefülltes Karo steht für den Druckverlust $\Delta$ p, ein leeres Karo für den Holdup hp.

Der dynamische Hold-up betrug bei F-Faktoren < 3 Pa$^{0,5}$ nur etwa 2%. Dieser stieg bei einer weiteren Erhöhung des F-Faktors um weniger als 10% abrupt an und führte zum Fluten der gesamten Packung. Ein gezieltes Einstellen eines dynamischen Holdup hp von mehr als 2% war wegen dieser Charakteristik nicht möglich. Auch der Druckverlust $\Delta$ p zeigt bei höheren F-Faktoren einen sehr steilen Anstieg.

Beispiel 1:

Die Versuchsanordnung und Betriebsbedingungen entsprachen denen des Vergleichsbeispiels. Im Unterschied zu dem Vergleichsbeispiel wurde die Kolonne jedoch mit einer Ausführungsform einer geordneten Packung gemäß der vorliegenden Erfindung bestückt. Diese bestand aus 3 Packungslagen, die jeweils aus einer ersten, unteren Teilpackungslage und einer zweiten, oberen Teilpackungslage zusammengesetzt waren. Die erste, untere Teilpackungslage war eine geordnete Blechpackung in Kreuzkanalstruktur mit einer spezifischen Oberfläche von 250 m$^2$/m$^3$ und einer Höhe von 0,20 m (Bauart Montz B1-250), wie sie bereits im Vergleichsbeispiel Verwendung fand. Es wird insofern auf die Ausführungen zu dem Vergleichsbeispiel verwiesen. Die zweite, obere Teilpackungslage war eine geordnete Blechpackung mit einer spezifischen Oberfläche von 500 m$^2$/m$^3$ mit einer Höhe von 0,03 m (Bauart Montz B1-500). Diese Blechpackung wies Packungselemente mit geradlinigen Knicken auf, deren Knickverläufe einen Winkel von 45° mit der Längsachse der Packungslage bildeten. Die Packungselemente wiesen kreisförmige Perforationen auf. Die Höhe H einer Packungslage betrug 0,23 m. Die drei Packungslagen wurden in der Kolonne übereinander angeordnet.

Es wurden entsprechend dem Vergleichsbeispiel der Differenzdruck bzw. Druckverlust $\Delta$ p und der dynamische Holdup hp der geordneten Packung gemessen. Die Ergebnisse der Messungen sind in der Fig. 8 als Quadrate dargestellt. Ein gefülltes Quadrat steht für den Druckverlust $\Delta$ p, ein leeres Quadrat für den Holdup hp.

Der dynamische Holdup hp ließ sich durch Steigerung des F-Faktors von 1,5 auf 2,5 gleichmäßig von 2% auf 8 % anheben. Der Druckverlust korreliert gut mit dem Holdup hp. Durch Wahl des Druckverlustes läßt sich ein gewünschter Wert des Holdups hp gezielt einstellen.

Beispiel 2:

Die Versuchsanordnung und die Betriebsbedingung entsprachen denen des Vergleichsbeispiels oder des Beispiels 1. Die Kolonne wurde mit einer Ausführungsform einer geordneten Packung gemäß der vorliegenden Erfindung bestückt, wobei die geordnete Packung im wesentlichen mit der in Beispiel 1 übereinstimmte. Die geordnete Packung bestand wiederum aus drei Packungslagen, die sich jeweils aus einer ersten, unteren Teilpackungslage und aus einer zweiten, oberen Teilpackungslage zusammensetzten. Die erste, untere Teilpackungslage entsprach derer in Beispiel 1 bzw. derer in dem Vergleichsbeispiel verwendeten Blechpackung. Es wird insofern auf obige Ausführungen verwiesen. Die zweite, obere Teilpackungslage bestand jedoch im Unterschied zu Beispiel 1 aus einer Gewebepackung mit einer spezifischen Oberfläche von 500 m$^2$/m$^3$ (Bauart Montz A3-500). Diese Gewebepackung wies Packungselemente mit geradlinig verlaufenden Knicken auf, deren Knickverläufe mit der Längsachse der Packungslage einen Winkel von 30° bildeten. Die Packungselemente wiesen kreisförmige Perforationen auf. Die Höhe der zweiten, oberen Teilpackungslage betrug, wie in Beispiel 1, 0,03 m. Die Höhe einer Packungslage betrug demgemäß, wie in Beispiel 1, 0,23 m.

Entsprechend dem Vergleichsbeispiel und dem Beispiel 1 wurden der Differenzdruck bzw. Druckverlust $\Delta$ p und der dynamische Holdup hp gemessen. Die Ergebnisse der Messungen sind in der Fig. 8 als Kreise dargestellt. Ein gefüllter Kreis steht für den Druckverlust $\Delta$ p, ein leerer Kreis für den Holdup hp.

Der dynamische Holdup konnte durch Steigerung des F-Faktors von 2,0 auf 3,0 gleichmäßig von 2% auf 10% angehoben werden. Auch hier korreliert der Druckverlust gut mit dem Holdup hp und erlaubt ein gezieltes Einstellen eines gewünschten Holdups.

Beispiel 3:

In einer Versuchskolonne mit einem Durchmesser von 0,1 m wurden Destillationsversuche mit einem Testgemisch aus Isobutanol und n-Butanol bei einem Druck von 1 bar durchgeführt. Die Kolonne wurde mit einer Ausführungsform einer geordneten Packung bestückt, die derer des Beispiels 2 entsprach.

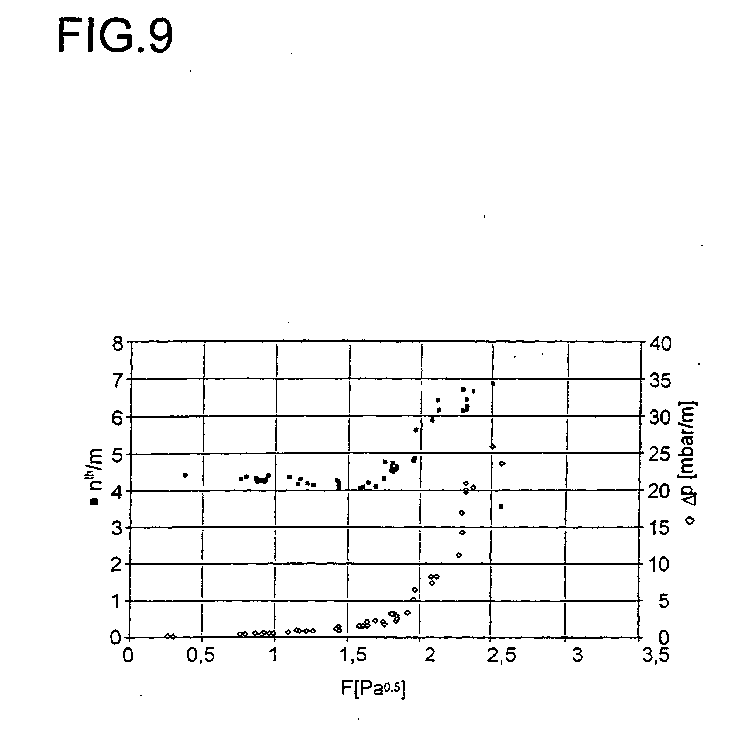

Es wurden der Differenzdruck bzw. Druckverlust $\Delta$ p und die Anzahl der theoretischen Trennstufen $n_{th}$ je Meter [m] Packungs-/Kolonnenhöhe gemessen. Die Ergebnisse der Messungen sind in der Fig. 9 dargestellt. Ein gefülltes Quadrat steht für die Anzahl der theoretischen Trennstufen $n_{th}$ je Meter [m], ein leeres Karo für den Druckverlust $\Delta$ p.

Durch ein gezieltes Anstauen der Flüssigkeit über einen weiten, technisch nutzbaren Bereich konnte die Trennstufenzahl $n_{th}$ je Meter um etwa 50% erhöht werden. Der gewünschte vorteilhafte Betriebszustand ließ sich durch den Differenzdruck bzw. Druckverlust $\Delta$ p genau ansteuern.

Beispiel 4:

Die Versuchsanordnung, die geordnete Packung und das Testgemisch entsprachen denen des Beispiels 3. Der Betriebsdruck der Kolonne betrug jedoch nur 0,2 bar.

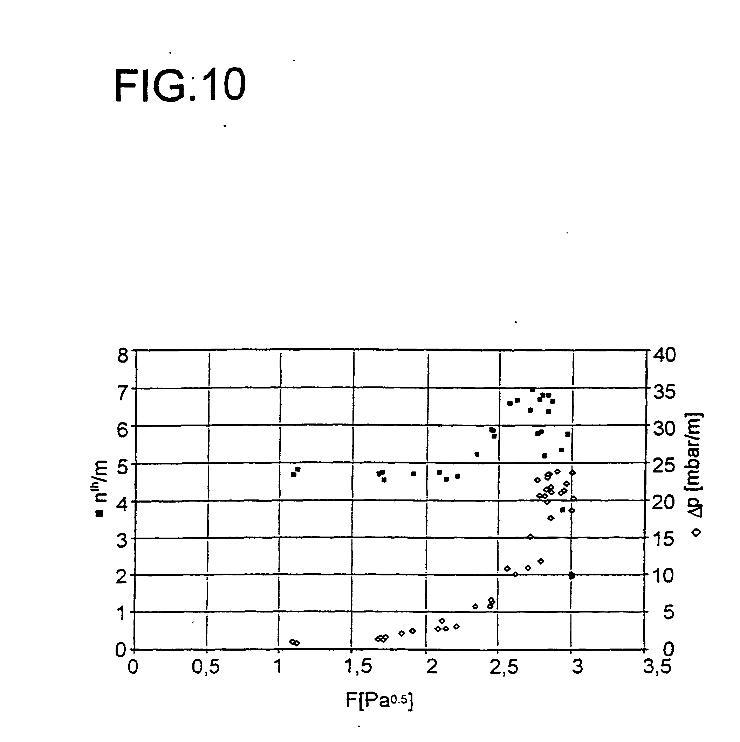

Es wurden wie in Beispiel 3 der Differenzdruck bzw. Druckverlust $\Delta$ p und die Anzahl der theoretischen Trennstufen $n_{th}$ je Meter [m] Kolonnen-/Packungshöhe gemessen. Die Ergebnisse der Messungen sind in der Fig. 10 dargestellt. Ein gefülltes Quadrat steht für die Anzahl der theoretischen Trennstufen $n_{th}$ je Meter, ein leeres Karo für den Druckverlust $\Delta$ p.

Auch in diesem Beispiel konnte durch das gezielte Anstauen der Flüssigkeit die theoretische Trennstufenzahl je Meter [m] Kolonnen-/Packungshöhe um etwa 50% gesteigert werden. Die Messung des Differenzdruckes $\Delta$ p ermöglichte auch hier ein exaktes Ansteuern des gewünschten Betriebszustandes.

**Patentansprüche**

1. Verfahren zum Wärme- und/oder Stoffaustausch zwischen einer Flüssigkeit und einem Gas in einer Kolonne, bei welchem die Flüssigkeit und das Gas über eine geordnete Packung aufweisend mindestens eine Packungslage (1) mit einem ersten, unteren Ende (2) und einem zweiten oberen Ende (3) mit über ihre Höhe variierender innerer Geometrie geführt werden und die Flüssigkeits- und Gasmengen so eingestellt werden, dass sich in einem ersten, insbesondere unteren Bereich (6) der Packungslage (1) gezielt eine Sprudelschicht mit überwiegend disperser Gasphase und gleichzeitig in einem zweiten, insbesondere oberen Bereich (7) der Packungslage (1) gezielt eine Filmströmung der Flüssigkeit mit überwiegend kontinuierlicher Gasphase ausbildet.

2. Verfahren nach Anspruch 1, **dadurch gekennzeichnet, dass** die Flüssigkeit und das Gas im Gegenstrom geführt werden.

3. Verfahren nach Anspruch 1 oder 2, bei welchem die Verweilzeit der Flüssigkeit in der Kolonne durch Wahl der Heizleistung unter Messung des Differenzdrucks gezielt eingestellt wird.

4. Verfahren nach einem der Ansprüche 1 bis 3, bei welchem die Packungslage (1) einen Strömungswiderstand besitzt, welcher über ihre Höhe variiert.

5. Verfahren nach einem der Ansprüche 1 bis 4, bei welchem der erste Bereich (6) der Packungslage (1) einen größeren Strömungswiderstand aufweist als der zweite Bereich (7) der Packungslage (1).

6. Verfahren nach einem der Ansprüche 1 bis 5, bei welchem die Packungslage (1)sich berührende, flächige Packungselemente (4), insbesondere Bleche, Streckmetalle, Drahtgewebe und Gestricke, mit Knicken (8) bestimmter Verläufe aufweist, wobei die Knickverläufe oder Tangenten an die Knickverläufe in dem ersten Bereich (6) der Packungslage (1) einen größeren Winkel ($\alpha$) mit der Längsachse (5) der Packungslage (1)bilden als in dem zweiten Bereich (7) der Packungslage (1).

7. Verfahren nach einem der Ansprüche 1 bis 6, bei welchem die Knicke (8) der Packungselemente (4) zumindest abschnittsweise einen bogenfömigen oder linearen Verlauf aufweisen.

8. Verfahren nach einem der Ansprüche 1 bis 7, bei welchem die Packungslage (1) Packungselemente (4) aufweist, wobei zumindest ein Teil der Packungselemente am unteren Ende (2) und/oder oberen Ende (3) der Packungslage (1) laschenartig abgebogen sind.

9. Verfahren nach einem der Ansprüche 1 bis 8, bei welchem die Packungslage (1) Packungselemente (4) aufweist, wobei zwischen mindestens einem Teil der Packungselemente (4), insbesondere am unteren Ende (2) der Packungslage (1), ein- oder beidseitig dünne Streifen (15), insbesondere aus Metallblech, angeordnet sind.

10. Verfahren nach einem der Ansprüche 1 bis 9, bei welchem die Packungslage (1) aus einer Kombination von mindestens einer ersten und einer zweiten Teilpackungslage (10, 11) zusammengesetzt ist, wobei sich die erste Teilpackungslage (10) und die zweite Teilpackungslage (11) bezüglich ihrer inneren Geometrie unterscheiden.

**Claims**

1. A process for heat exchange and/or mass transfer between a liquid and a gas in a column, wherein the liquid and the gas are conducted via a structured packing having at least one packing layer (1) with a first, lower end (2) and a second, upper end (3), the packing layer having an internal geometry which varies over its height and the liquid and gas flow rates are set such that in a first, in particular lower, region (6) of the packing layer (1) a bubbling layer having a predominantly disperse gas phase forms in a targeted manner and simultaneously in a second, in particular upper, region (7) of the packing layer (1) a film flow of the liquid having a predominantly continuous gas phase forms in a targeted manner.

2. A process as claimed in claim 1,**characterized in that** the liquid and the gas are conducted in countercurrent flow.

3. A process as claimed in claim 1 or 2, wherein the residence time of the liquid in the column is set in a targeted manner by selecting the heating power with the differential pressure being measured.

4. A process as claimed in claims 1 to 3, wherein the packing layer (1) has a resistance to flow which varies over its height.

5. A process as claimed in claims 1 to 4, wherein the first region (6) of the packing layer (1) has a higher resistance to flow than the second region (7) of the packing layer (1).

6. A process as claimed in one of claims 1 to 5, wherein the packing layer (1) has touching flat packing elements (4), in particular metal sheets, expanded metals, wire fabrics and knitted meshes, having folds (8) of defined courses, the fold courses or tangents to the fold courses being at a larger angle ($\alpha$) to the longitudinal axis (5) of the packing layer (1) in the first region (6) of the packing layer (1) than in the second region (7) of the packing layer (1).

7. A process as claimed in one of claims 1 to 6, wherein the folds (8) of the packing elements (4) have, at least in sections, a curved or linear course.

8. A process as claimed in one of claims 1 to 7, wherein the packing layer (1) has packing elements (4), with at least some of the packing elements being bent over in a tongue-like manner at the lower end (2) and/or upper end (3) of the packing layer (1).

9. A process as claimed in one of claims 1 to 8, wherein the packing layer (1) has packing elements (4), thin strips (15), in particular made of sheet metal, being arranged unilaterally or bilaterally between at least some of the packing elements (4), in particular at the lower end (2) of the packing layer (1).

10. A process as claimed in one of claims 1 to 9, wherein the packing layer (1) is composed of a combination of at least one first partial packing layer and one second partial packing layer (10, 11), the first partial packing layer (10) and the second partial packing layer (11) differing with respect to their internal geometries.

## Revendications

1. Procédé d'échange de chaleur et/ou de matière entre un liquide et un gaz dans une colonne dans lequel le liquide et le gaz sont conduits par un garnissage ordonné présentant au moins une couche de garnissage (1) ayant une première extrémité inférieure (2) et une deuxième extrémité supérieure (3) avec une géométrie interne variant sur sa hauteur et les quantités de liquide et de gaz sont ajustées de façon à former dans une première zone, en particulier inférieure (6), de la couche de garnissage (1) d'une manière appropriée une couche bouillonnante à phase gazeuse de manière prépondérante dispersée et simultanément dans une deuxième zone, en particulier supérieure (7), de la couche de garnissage (1) d'une manière appropriée un écoulement laminaire du liquide à phase gazeuse de manière prépondérante continue.

2. Procédé suivant la revendication 1, **caractérisé en ce que** le liquide et le gaz sont guidés en contrecourant.

3. Procédé suivant la revendication 1 ou 2, dans lequel le temps de séjour du liquide dans la colonne est ajusté de manière appropriée par le choix de la puissance calorifique en mesurant la pression différentielle.

4. Procédé suivant l'une des revendications 1 à 3, dans lequel la couche de garnissage (1) présente une résistance à l'écoulement qui varie sur sa hauteur.

5. Procédé suivant l'une des revendications 1 à 4, dans lequel la première zone (6) de la couche de garnissage (1) présente une plus grande résistance à l'écoulement que la deuxième zone (7) de la couche de garnissage (1).

6. Procédé suivant l'une des revendications 1 à 5, dans lequel la couche de garnissage (1) présente des éléments de garnissage (4) plans, qui se touchent, en particulier des tôles, des métaux déployés, des tissus métalliques et des tricots, avec des coudes (8) d'allures déterminées, les allures des coudes ou les tangentes aux allures des coudes formant dans la première zone (6) de la couche de garnissage (1) un angle ($\alpha$) avec l'axe longitudinal (5) de la couche de garnissage (1) qui est plus grand que dans la deuxième zone (7) de la couche de garnissage (1).

7. Procédé suivant l'une des revendications 1 à 6, dans lequel les coudes (8) des éléments de garnissage (4) présentent au moins par section une allure arquée ou linéaire.

8. Procédé suivant l'une des revendications 1 à 7, dans lequel la couche de garnissage (1) présente des éléments de garnissage (4), au moins une partie des éléments de garnissage étant pliée en forme de patte à l'extrémité inférieure (2) et/ou à l'extrémité supérieure (3) de la couche de garnissage (1).

9. Procédé suivant l'une des revendications 1 à 8, dans lequel la couche de garnissage (1) présente des éléments de garnissage (4), des bandes minces (15), en particulier en tôle métallique, étant agencées d'un côté ou des deux entre au moins une partie des éléments de garnissage (4), en particulier à l'extrémité inférieure (2) de la couche de garnissage (1).

10. Procédé suivant l'une des revendications 1 à 9, dans lequel la couche de garnissage (1) est composée d'une combinaison d'au moins une première et une deuxième couche de garnissage partiel (10, 11), la première couche de garnissage partiel (10) et la deuxième couche de garnissage partiel (11) se différenciant quant à leur géométrie interne.

# FIG.1

FIG.2

# FIG.3

# FIG.4

# FIG.5

# FIG.6

# FIG.7

# FIG.8

# FIG.9

EP 1 074 296 B1

# FIG.10